Europäisches Patentamt

European Patent Office

Office européen des brevets

(11) Publication number: **0 064 344**
A1

(12) **EUROPEAN PATENT APPLICATION**

(21) Application number: 82301954.2

(22) Date of filing: 16.04.82

(51) Int. Cl.³: **C 09 D 3/82**
**C 09 D 5/10**

(30) Priority: 24.04.81 US 256867

(43) Date of publication of application:
10.11.82 Bulletin 82/45

(84) Designated Contracting States:
BE DE FR GB IT NL SE

(71) Applicant: MOBIL OIL CORPORATION
150 East 42nd Street
New York New York 10017(US)

(72) Inventor: Mcleod, Gordon Donald
26 East Walnut Street
Metuchen New Jersey(US)

(74) Representative: Cooper, John Anthony et al,
Mobil Court 3 Clements Inn
London WC2A 2EB(GB)

(54) Silicate binder compositions used in single package zinc and ceramics coating compositions and a method of curing silicate binder compositions.

(57) There is disclosed a silicate binder useful in single package zinc-containing coating compositions and in ceramic compositions. The binder has a limited degree of hydrolysis of about 51% to about 63%. In a preferred embodiment, the binder is a reaction product of (1) a silicate or siloxane and (2) a glycol ether or alcohol having a boiling point at least equal to the boiling point of isobutyl alcohol, e.g., butyl cellosolve.

A method is also disclosed of rapidly curing silicate binder compositions by the addition of 0.05 to 1.5 weight % of a strong organic amine, e.g. monoethanolamine.

EP 0 064 344 A1

SILICATE BINDER COMPOSITIONS USED IN SINGLE
PACKAGE ZINC AND CERAMICS COATING COMPOSITIONS AND A
METHOD OF CURING SILICATE BINDER COMPOSITIONS

The present invention relates to a single package zinc coating composition with a silicate binder for the protection of steel surfaces against rust. The binder used in the single package zinc compositions can be used also in ceramic coatings useful as high-temperature coating systems. The invention also relates to a particular silicate binder with a specified degree of hydrolysis and formed of particular reactants.

Alkyl silicate binders and various uses therefor have been known since 1933. Compositions containing alkyl silicate binder and zinc for coating steel surfaces have been known for at least 30 years. Numerous improvements have been made in these coating compositions and the art is a very close one.

Representative U.S. patents directed to various zinc silicate coating compositions are

| | |
|---|---|
| 2,027,931 | 3,649,307 |
| 2,048,799 | 3,653,930 |
| 2,450,327 | 3,730,743 |
| 3,056,684 | 3,730,746 |
| 3,112,538 | 3,804,639 |
| 3,392,130 | 3,832,204 |
| 3,475,185 | 3,859,101 |
| 3,517,648 | 3,932,339 |
| 3,607,319 | 4,014,703 |
| 3,615,730 | |

These patents describe different ways in which to produce zinc silicate coating compositions. The patents show compositions where there is any of a broad range of hydrolysis (i.e. 25 to 95%), a low range of hydrolysis using e.g. Ethyl Silicate 40 or condensed, polyol silicates, polyvinyl butyrals, acetals, and formals, and other chemical modifications in the basic composition. The present invention is based on the finding that a particular degree of hydrolysis in the silicate binder will give coating compositions with especially good properties.

The present invention is directed to single package zinc coating composition containing a particular silicate binder and to ceramic slurries containing the particular silicate binder. Both the single package zinc compositions and the ceramic slurries have exceptional and unexpected properties in ease of application, suspension, stability, and reliability of all weather cure under any conditions. The silicate binder used in the coatings of the present invention can be used to form protective and galvanic coatings that cure under nearly all climatic conditions, and to form protective and galvanic coatings having superior long-life performance with and. without organic topcoats.

The silicate binder of the present invention is characterized by having a degree of hydrolysis from about 51% to about 63% which can be used to form a stable zinc dust silicate coating. At a degree of binder hydrolysis of greater than 63%, e.g., 65%, a solid gelling of the coating is observed. The higher the hydrolysis and alkalinity, the quicker the gel upon aging. Binder compositions containing a silicate with a degree of hydrolysis of 51% to 63% are especially useful in single-package zinc paints. The ultimate hydrolysis of the silicate in the paint may be several percent higher than that of the silicate binder used to make the paint since the binder absorbs moisture from the fillers, zinc, and solvents - depending on their moisture content and the ratio of binder silica to fillers, zinc, and solvent.

The use of a particular silicate binder of the present invention (to be described in more detail infra) will result in a single package coating that is not prone to mudcracking, gassing, and pinholing and cures well even under high humidity curing conditions. As indicated above, the silicate binder of the present invention has a narrow range of hydrolysis.

The silicate binder of the present invention can be used to form zinc coatings which have desirable curing properties under nearly all weather conditions and which are easy to use.

The silicate binder of the present invention may contain some higher boiling glycol ethers or alcohols esterified into the silicate using an acid catalyst. The term "higher boiling" refers to glycol ethers or alcohols that have a boiling point at least as high as the boiling point of isobutyl alcohol. This aspect is described in more detail herein. Typical acid catalysts include strong mineral acids such as sulfuric acid and hydrochloric acid. It is believed that the alkyl silicate containing at least some high boiling glycol ether or alcohol will remain liquid longer than other binders in the sprayed coating and hence can absorb more moisture from the air as the binder dries. Although it takes longer for a coating containing silicate binder containing a greater quantity of higher boiling glycol ether or alcohol to dry, the coating will absorb more moisture from the air during cure which makes the resulting zinc film especially useful for topcoating with organic paints. Zinc primers of this invention made with binders containing substantial higher boiling glycol ethers cure adequately to hard coatings with or without curing agents described herein while the zinc primers of this invention containing all higher boiling alcohols always require a strong amine to cure to a hardness that is adequate to be useful as a coating. The curing agents lead peroxide and monoethanol amine or dibutyl amine are particularly useful to achieve rapid cure and early hardness. For a fast curing preconstruction primer that requires rapid handling, the binders of this invention may optionally contain a smaller amount of higher boiling glycol ether or alcohol along with low boiling isopropyl alcohol or ethyl alcohol or a volatile hydrocarbon solvent such as toluene or naphtha. For maintenance primers that are applied to exterior surfaces at atmospheric conditions and require no immediate handling, it is preferable for the binder of this invention to have a substantial amount of higher boiling glycol ether or alcohol esterified into the silicate used in the zinc paint formulation. The higher boiler based coating compositions are particularly useful in outdoor applications.

The invention also relates to formulation techniques involving the novel binders for long-life novel coatings wherein the cured coatings give superior protection. Single-package novel primers made with the silicate binders of the present invention are stable over long periods of time (over a year) without excessive thickening, lumping, settling hard, or gassing. Yet when the primers are applied as coatings, even after long aging, by conventional means such as air and airless spraying and brushing, dipping, roll-on or other means, the coatings apply easily without dry spray or sag giving ready, easy, even coats on edges and filling sand or shot-blasted steel recesses evenly. Moreover, the coatings produced cure rapidly under most weather conditions to a hard adhesive coating which, when properly formulated, will not mudcrack to 22 mil (0.056 cm) (DFT) and rarely, if ever, pinhole and will accept organic topcoats readily without problems of adhesion. The coating is particularly good in high humidity application, curing to water insolubility and solvent insolubility overnight at 100% humidity or in less time when outside where slight dew may collect on the coating. The paint never skins over and can be kept for extended periods once opened for touch-up. In one experiment, a panel was coated in a rain storm and the coating cured perfectly in the rain. Organic topcoats found suitable for use with the coatings of the invention are those topcoats based upon solvent-based epoxy types, phenolics, chlorinated rubber, vinyls, urethane, epoxy coal tar, and acrylics as well as water-based versions of the above types and water reducibles. Other topcoat types include inorganic vehicle classes.

Fillers which can be used in the compositions of the present invention, in addition to the zinc, include very finely divided mica or amorphous, diatomaceous, alpha quartz, fused, and crystalline silica. Other suitable fillers include zircon, iron phosphides, mullite, calcium carbonate, clay, calcined clay, barytes, talc, wollastonite, zinc oxides, graphite, aluminum (powder, flake, grit, or bead) glass beads, stainless steel (flake or powder) or mixtures thereof and others. It is also possible to make compositions containing the filler with no zinc content. The filler is ordinarily present in the composition in a quantity of about 40 to about 250 lb per 100 gal. (18 to 113 kg per 379 1) of formulation. Care should be taken to make certain that the formulation is not too viscous for ready use. In final single package zinc formulations of this invention, the finely divided (i.e., less than 5 microns) silica fillers - diatomaceous and amorphous silica and alpha quartz - which may achieve their fineness by being broken up during manufacture and shearing of the paint slurry prior to addition of all of the silicate binder and solvents give greater bulk (volume) to the cured coating, whereas the finely divided mica or talc packs to prevent mudcracking. A combination of the two types of filler performs synergistically in the cured coating to give better volume (bulk), prevent mudcracking, and protect the zinc and corrosion inhibitors from leaching out of the coating on long aging exposure. The combination of the two types of filler also help to prevent settling in the can.

A typical coating formulation of the present invention contains 30 to 200 wt pts of mica, 17 wt pts of lead oxide, 8 wt pts of strontium chromate, 1,000 wt pts of zinc dust (Fed. #15 or equivalent), 25 wt pts of Bentone 27, 420 wt pts of a 18% $SiO_2$ modification of silicate binder, and 140 wt pts of isopropyl alcohol. This formulation gave an excellent coating composition which cured rapidly to a hard coating when applied on sandblasted steel. The coating accepted all organic topcoats listed supra and rusted nowhere on salt fog (ASTM B 117) aging for 1 1/2 years even at a thickness of only 1 1/2 to 2 mils (38 to 51 $\mu$m). Salt fog life can be increased by adding strontium chromate but it impairs 100% humidity cure if it is present in substantial amounts.

A particular silicate binder of the present invention is formed by reacting an organic silicate with a portion of a higher boiling glycol ether or alcohol along with isopropyl, ethyl, or methyl alcohol solvents. The organic silicate is an ortho or poly silicate having ester exchangeable groups of 1 to 6 carbon atoms selected from the group consisting of alkyl and alkoxyalkyl, siloxanes thereof, and their mixtures. The higher boiling glycol ethers and alcohols are those glycol ethers or alcohols having a boiling point at or above the boiling point of isobutyl alcohol and include ethyl cellosolve (ethylene glycol monoethyl ether), ethylene glycol monobutyl ether, n-butyl alcohol, isobutyl alcohol, ethoxyethanol, amyl alcohol, sec-butyl alcohol, and the like.  It has been found that the silicate binder composition should contain about 20% by weight of an alkoxyalkanol in order to ensure effective cure of a single package zinc coating composition when oxides of lead or organotin compounds are used as curing agents.  Strongly basic organic amines are capable of curing the coating compositions even when no or a smaller amount of an alkoxyalkanol is present in the silicate binder composition.

When formulating the single package zinc coating compositions of the present invention, zinc can be added to the silicate binder in either flake or particulate form.

When the degree of hydrolysis of the binder is below 55% and there is a smaller amount of alkoxyalkanol in the binder or paint, the coating compositions need to contain at least one of the following curing agents:  (a) oxides of lead, (b) a strong organic amine, (c) organotin compounds, or mixtures thereof.  For degrees of binder hydrolysis between 55 and 63% and with substantially high boiling alkoxy alkanol, the coating compositions may optionally contain the curing agents for a faster cure.

The lead oxide used as a curing agent for the single package zinc coating compositions can be any of litharge (PbO), red lead, lead peroxide, and a mixture of potassium dichromate and red lead.  The lead oxide is present in the composition in a quantity of about 0.1 to about 1.5% by weight based upon the weight of the composition.

The strong organic amine can be any strong amine and especially any of those of the group of monoethanol amine, dibutyl amine, diamyl amine, diisopropyl amine, cyclohexylamine, diethylene triamine, triethylene tetraamine, ketamine, and piperidine.  The organic amine is added in a quantity of about 0.05 to about 1.5% by weight based upon the weight of the composition.

The organotin compounds can be tin alkoxides, organotin hydroxides, aryl tin compounds, and the like. Representative compounds are tributyl tin oxide, dibutyl tin dilaurate, triphenyl tin oxide, tributyl tin fluoride, triphenyl tin acetate, diphenyl tin hydroxide, triphenyl tin chloride, and triphenyl tin fluoride. The organotin compound is added in a quantity of 0.05 to about 1.5% by weight based upon the weight of the composition.

It is possible to use any of these curing agents alone or in combination.

It has been found also that instead of all of the curing agents listed above, it is possible to prepare an effective single package zinc coating composition using as the curing agent an inert pigment having alkalinity. These pigments include magnesium carbonate, calcium carbonate, diatomaceous silica, bentone, mica (alkaline type), mullite, and wollastonite. The pigment has to be added in an amount sufficient to assure basicity of the composition.

It has been found also that when the silicate binder has a degree of hydrolysis of about 55% to about 63% and is formed by reacting an organic silicate with ethylene glycol monobutyl ether, a zinc coating composition can be prepared without requiring a curing agent. A curing agent may be employed but it is not necessary.

It has been found desirable to use at least about a fourth, and preferably at least about one half, of the higher boiling glycol ether or alcohol in the solvent when the silicate binder is being prepared. A particularly preferred weight ratio of higher boiling glycol ether or alcohol to silicate when the binder is being prepared is at least 1:5.

It is also advantageous to incorporate into the composition a compound functioning as an anticorrosion agent that is a source of hexavalent chromium ions. The resulting composition will have an increased service life in salty atmosphere exposures. The hexavalent chromium ion source compounds are preferably used with lead peroxide and the silicate binder. These compounds include strontium chromate, calcium and magnesium chromates, lead chromate, lead molybdenum chromate, zinc chromate, and lead silico chromates and are added in a quantity of from about 0.2 to about 4.0% by weight based upon the weight of the composition. The less soluble the chromates (e.g. lead chromates), the greater the quantity of chromate that should be used. More soluble chromates such as alkaline earth chromates can be used in lesser amounts. In certain coatings of this invention, the chromates present or being generated may react with other fillers during aging and weathering exposure to solubilize or insolubilize the chromate to generate just enough chromate to inhibit red rust and corrosion but not so much as to leach out and be lost. Fillers, particularly mica, have been found to extend the salt fog life of the composition of the present invention when the chromates are present.

A storage stable single package zinc coating composition can be produced from a mixture of zinc, a silicate binder having a degree of hydrolysis from about 51% to about 63%, and at least one of the curing agents listed above. It is preferable that the composition also contain an anti-settling agent (functioning as well as an anti-sag agent and a suspending agent) selected from the group of amine- or quaternary amine-treated montmorillonite clays. The anti-settling agent is ordinarily added in an amount of about 0.14 to about 2.2 wt% based upon the weight of the entire composition, with a quantity of 0.47 to 2.2 wt% particularly preferred. A typical anti-settling agent is a quaternary amine-treated montmorillonite clay, e.g., Bentone 27, optionally combined with a submicron silica. Other worthwhile additives include an anti-gas agent selected from the group of lead peroxide, propylene oxide, styrene oxide, red lead, potassium dichromate and other conventional water scavengers and anti-gas agents. It should be noted that lead peroxide and various other lead oxides (such as a mixture of red lead and potassium dichromate) are capable of functioning both as a curing agent and an anti-gas agent. Ordinarily higher quantities of these materials are added to the composition if they are to perform both functions. When alkylene oxide or phenylene oxide anti-gas agents and water scavengers are used, they are usually present in a quantity of about 0.3 to about 2 wt%. If lead peroxide is used as an anti-gas agent, it is ordinarily added in a quantity of about 0.12 to about 2 wt%. A preferred filler composition contains a blend of finely divided mica or talc and any of amorphous, diatomaceous, soft, and alpha quartz silica.

If the degree of hydrolysis in the binder is greater than 55% (e.g. 60%) and the weight ratio of alkylene glycol monoalkyl ether to alkyl silicate is greater than 1:5, then a curing agent is not necessary but can be optionally included for a faster cure. When calculating the degree of hydrolysis, an allowance must be made for free water-containing fillers which if present in substantial amounts may gel the coating if the total degree of hydrolysis exceeds about 67%; in such an instance, a higher binder: silica ratio or a lower degree of binder hydrolysis may be necessary to achieve stability. The fillers may be predried with the silicate binder prior to use in the formulation.

Preferred formulations contain the following components:

A. 0.2 to 1 wt % of an alkaline earth chromate, preferably strontium chromate;

B. 3.5 to 15 wt % of a filler selected from mica, talc, a very finely divided diatomaceous silica, amorphous silica, soft silica, or alpha quartz silica;

C. Sufficient binder and substantially water-free solvent to liquefy the composition to a sprayable consistency, the blend containing 6 to 24% silica as $SiO_2$ with a preferred range of 6 to 20%;

D. 0.12 and 2 wt % of a lead peroxide anti-gas agent or 0.3 to 2 wt % of an anti-gas agent and water scavenger taken from any of ethylene oxide, propylene oxide, and styrene oxide;

E. Sufficient zinc in the formulation so that the cured coating contains 70 to 88% zinc filler in the cured dried film (40 to 88% with $Fe_2P$ filler);

F. 0.47 to 2.2 wt % of a suspending agent selected from the group of quaternary amine adducts of montmorillonite clays, bentonites, Bentone 27 (trade name), or Bentone 27 plus submicron silica; and

G.   optionally, if and when necessary as described
herein, a curing agent (or accelerator) selected from the group of 0.12
to 2 wt % of lead peroxide or 0.1 to 0.8 wt % of a strong amine
(described supra).

I.   Binder

   A.   Hydrolysis 51 to 63%

      Hydrolysis is defined for purposes of this application as
% total hydrolysis plus condensation, e.g., 8.8 g water reacted with
100 g tetraethyl orthosilicate, condensed or pure, (TEOS) gives a
product which is 51% hydrolyzed and 10.8 g water reacted with 100 g
TEOS gives a product which is 63% hydrolyzed.  When using Ethyl
Silicate 40 (ES 40), only 2.6 g water per 100 g ES 40 gives 51%
hydrolysis whereas 5.5 g water per 100 g ES 40 gives 63% hydrolysis.
It can readily be seen how narrow the range of water addition is
required to achieve the valuable binder properties described herein.

      It has been found that at a degree of hydrolysis over 65%, the
binder gels when mixed in a paint; the higher the hydrolysis the faster
the gel.  Two-package paints must be made when the silicate binder is
over 65% hydrolyzed.  Particularly when fillers and solvents contain
additional moisture, stability problems may exist and should be
adjusted for in the binder hydrolysis.  It has been found that under
51% hydrolysis, a much softer coating results which does not cure as
rapidly. •At hydrolysis levels less than 50% (i.e., 40, 30 or 20%)
hydrolyzed, the resultant coating will never completely cure at 100%
humidity conditions.  The higher the degree of hydrolysis, the harder
the coating, the faster the cure, and the more reliable the cure to all
weather applications including high humidity, low humidity, heat, and
cold.  However, if the degree of hydrolysis of the binder added is
above 63% (i.e. 65%), the resultant paint is not stable and may slowly
gel over a period of time - the higher the degree of hydrolysis of the
binder in the paint and the greater the basicity, the faster the paint
gels or the faster the applied coating cures.

   B.   Silica Content

      It is preferred that the silica content in the binder
plus the solvent be in the range of 6 to 24%, the amount dependent on the filler.    As indicated supra, a particularly preferred range is 6
to 20%.

It has been discovered also that adding from about 0.05 to
about 1.5 wt % of an organic amine such as monoethanolamine, dibutyl
amine, diamyl amine, or diisopropyl amine to the finished paints of the
present invention which are properly formulated will give a greatly
accelerated coating cure time which permits the binder to be used as a
thin fast-curing production line primer.  It is also possible to
produce a zinc primer coating which can be topcoated in a few minutes,
an hour, or a few hours as desired after application.  By varying the
amounts of amine, the curing time of the zinc coating can be
controlled.  It is also possible to control the curing time by
increasing binder hydrolysis prior to amine addition and application of
the coating.  The greater the degree of hydrolysis and/or the greater
the amount of amine added prior to application of the coating, the
faster the coating cures.  This means that adjustment is necessary to
achieve both a rapid cure and an adequate pot life of the paint
containing the accelerator.  The accelerator also gels the paint in the
container if the degree of hydrolysis of the binder is too high (i.e.
>63%) and in this case the amine accelerator should be added just prior
to application.  This allows thereby improved productivity in dry
docking or other situations where rapid topcoating sequences are
mandatory to cut down on expensive curing time prior to topcoating
required by conventional inorganic zinc.  It has also been discovered
that buffering blends of higher amounts of the amines with acidic zinc
salts such as zinc phosphates can be useful in accelerating cure time.
The mudcracking tendency can be reduced should the particular
formulation be susceptible to it by reducing or leaving the basic
curing agent out of the formula or by lowering binder hydrolysis.  The
relative basicity of the entire zinc-silicate paint including all
ingredients such as fillers and zinc fillers, corrosion inhibitors,
suspending agents, and other ingredients must be considered for their
effect on the entire paint stability in conjunction with the narrow
hydrolysis range of the binder permitted to achieve package stability for extended periods even though the paint when applied as a coating and allowed to dry, cures to a hard coating. The higher the degree of hydrolysis, the faster the cure.

The presence of the lead oxide curing agents (especially red lead and lead peroxide with the latter preferred) in ranges of 0.1 to 1.5% in the zinc silicate primer inhibits gassing. Other anti-gassing agents may be used optionally with or without these minor amounts of lead in the composition to prevent gassing. The lead also increases hardness, gives reliability under all weather conditions of application, accelerates water and solvent insolubility, makes the coating more conductive, and increases salt fog life. Trace amounts of dichromates or substances that form dichromates will decrease gas even more, particularly when combined with lead. These advantages were totally unexpected. Formulation data also indicate that at higher lead levels (i.e. >1%) a higher binder silica, along with the higher lead, increases salt fog performance particularly when minor amounts of alkaline earth chromates are present. Other anti-gas agents include water scavengers such as alkylene oxides, phenylene oxides, calcium sulfate, and the like.

C. Binder, Solvent, and Reactants

The use of a higher boiling glycol ether or alcohol such as butyl cellosolve will reduce the mudcracking tendency and unexpectedly help anti-sag and suspension, increase cure rate substantially and give a better, more reliable cure regardless of humidity or temperature. The butyl cellosolve (ethylene glycol monobutyl ether) also eliminates dry spray and improves penetration of the coating into recesses of the substrate. However, for a fast-dry primer which produces a type of coating that can be handled directly after coating application, the higher boiling solvents should be reduced or even eliminated to achieve the faster handling times (in seconds or minutes) after application. In this case, the faster curing amine cure accelerators may be used in the formulation which optionally contains lead. If lead is not used, other anti-gas agents should be added.

D.   Fillers and Extenders

Fillers and extenders will reduce cost and improve the coating thickness per gallon of these formulations. When properly incorporated in moderate amounts (i.e. 25 to 250 lbs per 100 gallons [11 to 113 kg per 379 l] formula), fillers and extenders increase salt fog life (in the presence of chromates), reduce water rub penetration, reduce mudcracking, and achieve improved protection. A quantity of 30 to 200 lbs/100 gal. (14 to 91 kg/379 l) formula of finely divided mica - such as English wet ground mica (325 mesh to 3,000 mesh), dry ground mica, and inexpensive phlogopite-type mica which can be highly delaminated by high energy physical means to form separate sheetlets may be used. Very finely divided and 325 mesh and finer diatomaceous silica, amorphous silica, mullite, clay, barytes, silica, calcined clay, wollastonite, talc, calcium carbonate, iron phosphides such as ferrophos, mica, fused silica and zinc oxide and mixtures thereof may be used as extenders for the zinc dust in this invention. Particularly good combinations of fillers include mica or talc plus finely divided diatomaceous, amorphous, or alpha quartz silica. The mica prevents mudcracking and the very fine silicas give bulk (volume) to the cured coating. The mica also prevents leaching of the zinc and inhibitor from the coating on long exposure to weathering.

E.   Ester exchange components in Binder

Although it is highly preferable to ester exchange substantial amounts of higher boiling glycol ethers or alcohols into the binder silicate backbone with ethylene glycol monobutyl ether being preferred for outdoor curing coatings, smaller or zero amounts high boiling ethers or alcohols should be used in shop primers which are handled immediately. When all low boiling alcohols are present in the solvent, sluffing, dry spray, skinover, poorer curing properties, softer coatings, and mudcracking often occur in thicker coatings. Ethylene glycol monobutyl ether exchanged into the binder is far better than isopropyl alcohol or ethyl alcohol, ethoxy ethanol is far superior to butyl alcohol, and butoxy ethanol is far superior to 2-ethoxy ethanol when the coating is used for outside coatings where rapid dry-to-touch or handle is not required.

F. Anti-settling, anti-sag, and suspending agents

Representative suspending and anti-settling agents useful in the practice of the present invention include quaternary amine-treated montmorillonite clays, bentonites, silica, and sub micron silica that has been silicone treated. It is preferred to have between 0.42 and 2.2% of an antisettling agent (performing also as an anti-sag agent and a suspending agent) such as Bentone 27 alone or combined with submicron silica in the paint formulation. Diatomaceous silica which is high sheared into the paint compositions of this invention also acts as a suspending agent in conjunction with the Bentone 27.

A representative range of ingredients in the paint follows. It is for example only.

600 to 2500 wt pts very fine zinc dust (major portion in 1 to 20 micron range with a preferred average particle size in the 2 to 8 micron range)

8 to 40 wt pts Bentone 27

20 to 250 wt pts of a very finely divided filler selected from the group of mica, diatomaceous silica, wollastonite, clay, talc, barytes, silica, mullite, ferrophos, calcium carbonate and zinc oxide or mixtures thereof

6 to 17 wt pts lead oxide such as lead peroxide*

5 to 17 wt pts strontium chromate or zinc chromate

350 to 550 wt pts binder (15-22% $SiO_2$)

25 to 200 wt pts isopropyl, ethyl, butyl or methyl alcohol and/or glycol ethers thereof

50 to 80 wt pts 5% ethyl cellulose in cellosolve (optional)

The liquid portion should total about 300 to 800 pts.

A representative high solids primer contains:

1500 to 2800 wt pts coarser zinc dust such as Fed. #1

0 to 400 wt pts filler such as sufficient English mica, diatomaceous, amorphous, or alpha quartz silica (with the higher weights of filler particularly useful in higher bulk (volume) formulae where high mil-ft/gallon coverage is desired)

5 to 17 wt pts strontium chromate

6 to 17 wt pts lead oxide

8 to 30 wt pts Bentone 27

Sufficient binder and organic solvent to result in sprayable consistency and wherein the binder and solvent constituting the total liquid portion of the paint will have a silica content of 6 to 24% by weight (silica as $SiO_2$)

*  If other cure agents (e.g. amines) are used in place of the lead peroxide and other anti-gas agents are used in its place, the quantity of lead peroxide can be eliminated or reduced.  Anti-gas agents can be used in conjunction with the amine cure agents.

The invention will now be more particularly described with reference to the following Examples.


## Example 1
### Preparation of binder from ethyl
### polysilicate 40 and butyl cellosolve

To 1,534 g of ethyl polysilicate 40 (a mixture of mono, di, tri, tetra and penta siloxanes and cyclic siloxanes and crosslinked silicates with a silicon atom to alkoxy ratio of about 0.41 moles silicon/1 mole alkoxy and assumed to be about 40% hydrolyzed and condensed), there was blended 1,796 g ethylene glycol monobutyl ether ($C_4H_9OC_2H_4OH$) and the resultant mixture was heated to 140°F (60°C).  (It is not necessary to always heat but heating will assure a faster reaction).  Concentrated hydrochloric acid in a quantity of 5.4 ml. was added to the mixture and 77 g of tap water was then added dropwise while stirring over a one hour period.  The binder was aged at least one day before usage in the paint of Example 2.  The resultant binder was calculated to be 61% hydrolyzed and had 18% $SiO_2$.


## Example 2
### Preparation of paint containing the binder of Example 1

A paint was made by high shearing a mixture containing the following ingredients in a Hockmeyer mixer to a temperature of 120°F: (49°C)

> 168 g isopropyl alcohol
>
> 74 g 5% ethyl cellulose in ethoxy ethanol
>
> 200 g English micro mica ·(C 3000)
>
> 12 g lead peroxide
>
> 8 g strontium chromate
>
> 1,000 g zinc dust (2 to 10 microns, Meadowbrook)
>
> 28 g Bentone 27[+]
>
> 2 g lead chromate (for color only)
>
> 411 g binder of Example 1 added in increments
>
> to keep viscous but liquid for shear

[+]Bentone is the trademark for a class of products resulting from cation exchange reactions between organic bases and bentonite or its clay mineral component, montmorillonite. The individual products are identified by a number following the name Bentone.

The paint had a Krebs viscosity of 78 at 75°F (24°C) and was non-hard settling after 6 months at 120°F (49°C), non-gassing, and non-lumping. The paint was easily sprayed when applied as a coating and cured overnight in a 100% humidity exposure to water, the cured coating showing solvent (MEK) insolubility when subjected to a rag-rub test. The coating passed salt fog exposure (ASTM B117) for 1 1/2 years at only 2 1/2 mils (63.5 $\mu$m) thickness with no indication of rust. The following tests on the paint also indicated that it:

1. cured to water-rub insolubility at 100% humidity.

2. accepted topcoats easily and cured without adhesion difficulties.

3. had no sag at 40 mils (0.1 cm) wet.

4. had no mudcracking to 22 mils (0.056 cm) dry film thickness.

5. was easy to spray and use.

6. wetted panel surfaces exceptionally well.

### Examples 3, 4, and 5

In these 3 examples 100, 150, and 200 g respectively of phlogopite mica known as Suzerite 325S were used in place of the English mica in Example 2 and each gave a similar excellent paint with good properties as described above. In these and other following examples using lower amounts of highly delaminated Suzerite phlogopite mica platelets (i.e., 30, 50, and 75 g of Suzerite 325S), the best salt fog life test results were found to be in formulations containing about 100 lbs (45 kg) mica per 1000 lbs (450 kg) zinc dust in a 100 gallon (379 l) formula.

### Examples 6, 7, and 8

In these examples the paint of Example 2 was modified by replacing the $PbO_2$ with 7, 10 and 17 g respectively of red lead. The paints exhibited similar good properties to that of Example 2 but $PbO_2$ gave better anti-gassing properties than red lead. It was found that using lead oxides alone as the anti-gas agent reduces gas but substantial amounts are required to reduce all gas for extended periods at temperatures of aging, i.e., 150°F (66°C). It was also found that the use of trace amounts of phosphoric acid (0.1 to 0.4 wt % of silica binder) along with reduced amounts of HCl catalyst (0.1 to 0.15 wt % of the silicate binder) improved the anti-gas properties of the resultant paints. Other anti-gas agents include alkylene oxides (such as ethylene oxide and propylene oxide), phenylene oxides (such as styrene oxide), trace amounts of dichromates such as potassium dichromate or substances that produce trace amounts of dichromates that passivate the zinc or coat it to reduce the tendency of moisture in the solvents and fillers to react with the zinc to produce hydrogen gas.

### Examples 9, 10, 11, and 12

In another series of examples, the binder of Example 1 was varied in quantities of 300 g, 500 g, 550 g, and 600 g and the isopropyl alcohol and ethyl cellulose solution was reduced to meet the same liquid/solids ratio. Again coatings with satisfactory properties were produced.

## Examples 13, 14, 15, and 16

In another series of examples 5, 10, 26, and 63 g of zinc phosphates were added respectively as a buffering agent to accelerate cure with good results.  Zinc phosphate in the formula without the chromate inhibitor caused premature salt fog failure however.

## Example 17

In another example, the binder used was made with a blend of less butyl cellosolve (796 g) and some ethyl cellosolve (1000 g) in place of the (1796 g) ethylene glycol monobutyl ether giving a paint formulation with similar properties.

## Examples 18, 19, 20, and 21

In other binder experiments, the solvents were varied so that instead of the binder having 18% silica, it had 15, 22, 24, and 28 % silica.  The resultant binders were formulated into paints as given above and resulted in high solids paints having similar good properties.

## Examples 22, 23, and 24

In another series, experimental formulation blends of finely divided mica (>70 wt %) and diatomaceous earth (<30 wt %) filler were substituted for the 80 to 200 lbs. (36 to 91 kg) mica with similar good results.  It has been found that paints containing a large amount (>80 lb.) of diatomaceous earth may require a degree of hydrolysis in the binder of less than 60% in order to be stable.  The diatomaceous earth contains water and basic constituents and in large amounts causes gelling of the paint.

## Example 25

In another series, a binder was made with butyl alcohol as a portion of the solvent and the resulting paint formulation contained 0.3 wt % monoethanol amine to give a very rapid curing zinc coating useful in rapid topcoating and as a production line primer.

### Example 26

In another series, the volatile alcohols were distilled from the binder and the paint therefrom formulated with butyl and 2-ethoxy ethanol solvent to give a stable high flash version of the paint of Example 2.

### Examples 27, 28, 29, and 30

In another series, the amount of mica was reduced and zinc filler (coarse Fed. #1 zinc dust and Federated 10 to 40 micron very coarse zinc dust) was increased to from 1400 to 2600 g and a 24% silica modification of the silicate binder used to give high weight solids per gallon modification of the paint which performed similarly. Coarse mullite and ferrophos fillers worked well in a high weight solids per gallon formula with the coarse zinc. A blend of 40 g of very finely divided diatomaceous silica or very finely divided amorphous or alpha quartz silica plus 150 g of finely divided mica along with the high zinc gave a coating having much greater mil-ft/gallon coverage along with excellent salt fog performance and mudcrack resistance - the higher the quantity of filler and the finer the fillers, the greater the dry film thickness bulk per gallon of paint. It is necessary to have sufficient mica but not too much low porosity tripolite diatomaceous silica or too high binder hydrolysis to cause surface gelling and mudcracking. The mica inhibits mudcracking whereas excessive binder hydrolysis and diatomaceous silica may promote mudcracking in zinc formulations. More porous diatomaceous silica does not promote mudcracking and surface coating gelling if the binder hydrolysis is 55 to 59% and is an excellent filler in high solids formulations at 80 to 200 lbs. (36 to 91 kg) per 100 gallon (379 1) formula.

### Example 31

The binder was prepared by reacting by reverse hydrolysis 342 g $H_2O$ with 3259 g condensed ethyl silicate (predominantly all

tetraethyl ortho silica) in the presence of a trace of hydrochloric acid catalyst. The reaction took place by stirring the water and hydrochloric acid with 600 g condensed ethyl silicate with a heat exotherm, then slowly blending back the remainder of the condensed ethyl silicate while stirring to give a homogenous binder having 26% silica. This binder was made into zinc paint with the following components:

> 112 g isopropyl alcohol
>
> 74 g 5% ethyl cellulose in ethyl cellosolve
>
> 14 g Bentone 27
>
> 200 g English mica C3000
>
> 17 g strontium chromate
>
> 900 g Meadowbrook zinc dust (very fine)
>
> 411 g binder

The paint was high sheared in a Hockmeyer mixer using a 3 inch blade and then 4.8 g of dibutyl amine was added to the paint prior to application as a coating.

## Examples 32, 33, 34, and 35

In similar experiments the technique of Example 31 was repeated using 4 g red lead oxide, 8 g lead peroxide, 17 g lead oxide, and 34 g red lead oxide. Of the coated panels with the 5 paints of Examples 31 to 35, the lead-containing paints were harder, cured more rapidly, and were less prone to gassing whereas the paint without lead gave more gassing. All panels coated with the above paints gave exceptional salt fog life - i.e. 1 year - with no rust anywhere at thicknesses greater than 1 1/2 mils (38 $\mu$m). Each panel was half-coated with an epoxy polyamide.

In similar experiments, there were made very high red lead zinc paints (shipbottom) finding that at 8 and 23 wt % red lead (on solids), the paints gave exceptional life in salt fog exposure but the paint was unstable in accelerated long aging in the can (2 months at 120°F [49°C]). Hydrolysis should be lower in the higher lead formulas.

In all of these formulations it was found that:

1.  Bentone 27 reduced salt fog life properties; the more used, the poorer the salt fog life.  It is preferred to use less than 45 lbs. per 100 gal. (20 kg per 379 l) batch.

2.  Amines accelerate cure greatly but may promote gassing without lead so other anti-gas agents may be required in single package formulations.

The more amine, the greater the gassing and chance of gelling.  Lower amounts of amines do not cause gassing with anti-gas agents, yet accelerate curing greatly.

3.  Lead inhibits gassing, accelerates cure, extends salt fog life, increases hardness, and does not promote mudcracking.

4.  Other curing accelerators in addition to strong amines and lead oxides include tin oxides and organometallic compounds, zinc salts, and calcium and magnesium salts and compounds.


## Example 36

There was added 204 g isopropyl alcohol, 90 g of 5% ethyl cellulose in ethoxyethanol, 68 g C 3000 mica, 16 g lead peroxide, 35 g Bentone 27, 6 g zinc phosphate, 9 g strontium chromate, and 2 g lead chromate to 590 g of a silicate binder (described _infra_) and 1605 g of 2 to 10 micron zinc dust and the resultant mixture was blended in a Hockmeyer mixer to develop adequately the Bentone suspension properties.

The silicate binder had been prepared by mixing 1534 g Ethyl Silicate 40, 1796 g butoxyethanol, 60.5 g water, 1.7 ml (37%) HCl, and 2.89 ml $H_3PO_4$ at 60°C.

The resultant paint had excellent application and coating properties and was a good primer base for organic topcoats (epoxy polyamide, chlorinated rubber, and vinyls) and water-based acrylic topcoats.  The paint prevented rust undercutting at 3 mil (76 $\mu$m) DFT primer for periods of greater than one year in the ASTM salt fog test.  The paint was stable to gel and gas for more than 75 days at 150°C in a sealed container.

Chlorinated rubber topcoats were applied to a zinc coating similar to the above at 5 mil (127 $\mu$m) DFT after curing at one hour, two hours, four hours, and six hours with no noticeable bad effect on the coating system. The topcoated primers were placed on 3 by 6 inch (7.6 by 15.2 cm) sandblasted panels. Scoring the panels with an "X" from corner to corner revealed no blistering, no indication of any adhesive failure, and no rust or rust undercutting anywhere on the panels after 1.2 years of exposure to the ASTM salt fog test. This fast-cure, two-coat primer topcoat system shows real commercial value for time-saving coatings systems.

## Example 37

There were blended 117 g isopropanol, 90 g of 5% ethyl cellulose in ethoxyethanol, 68 g mica, 20 g lead dioxide, 7 g zinc phosphate, 3 g lead chromate, 45 g Bentone 27, and 1605 g zinc dust (2 to 15 microns) into 660 g of a silicate binder formed by blending 1796 g of butoxy ethanol, 1534 g Ethyl Silicate 40, 5.5 ml of 37% HCl, and 60.5 ml water at 60°C. The overall mixture was blended in a Hockmeyer blender having a high shear blade for a period of time to assure that the suspension properties of the Bentone 27 were developed properly.

The resulting zinc paint cured exceptionally rapidly to an insoluble coating in the MEK rag-rub test and had outstanding adhesion to the following organic topcoats - epoxy polyamide, polyurethane, vinyl, and chlorinated rubber. The paint was easy to mix and spray, had a viscosity of 73 Krebs, and when in a sealed container did not settle hard, gel, or gas at 150°C aging for at least 75 days. The paint cured at 100% himidity to insolubility in the water-rag rub test and cured overnight.

## Example 38

There were mixed 105 g isopropanol, 135 g of 5% ethyl cellulose in ethoxyethanol, 20 g diatomaceous silica, 120 g mica, 24 g lead peroxide, 33 g Bentone 27, 18 g chrome oxide, 2190 g of 2 to 30 micron zinc dust (Fed. #1) with 625 g of a silicate binder having a degree of hydrolysis of 60% and made with butoxy ethanol in a Hockmeyer mixer until the suspending properties of the fillers were developed. After cooling, the resulting paint had a viscosity of 83 Krebs and was easy to spray and use. The paint had excellent mudcrack resistance, coating hardness and adhesion, and accepted organic topcoats well after overnight cure. The paint had good anti-gas properties, no gelling, and no settling hard after 63 days at 150°F (66°C) in a sealed container yet performed well after exposure at these conditions as a coating.

### Example 39

There was mixed 76.9 g isopropanol, 73 g of 5% ethyl cellulose in ethoxyethanol, 118 g mica, 17 g strontium chromate, 28.4 g Bentone 27, 17 g lead peroxide, 850 g of 2 to 15 micron zinc dust, and 411 g of silicate binder made by blending 1534 g Ethyl Silicate 40, 1796 g butoxyethanol, 5.5 ml 37% hydrochloric acid, and 75 g water at 60°C. The mixture was high sheared to develop antisettling characteristics and then 150 g of zinc flake was added and sheared into suspensionate form to give a mixed zinc dust-zinc flake paint with a viscosity of 88 Krebs at 75°C. Resultant coatings made from the paint gave exceptionally good salt fog protection at steel surfaces even with extremely thin zinc coating thicknesses of only 0.1 to 0.5 mil (2.5 to 13 μm) DFT. The paint had good shelf life and was easy to use and spray and brush apply without difficulty and accepted topcoats well. In a similar experiment, 10 and 75 g of zinc flake were added in place of the 150 g of zinc flake and the resulting paints had good coating properties and were stable.

In other experiments using zinc flake as the only galvanic zinc, it was found that coating formulations giving good protection could be formed with a very low zinc content (e.g. 40%). Higher filler percentages and higher organic containing coatings can be formed when using zinc flake. The geometric flat shape of the flake allows much improved conductive coating contact, higher surface area, and better galvanic protection. The flat flake has this remarkable geometric shape and a higher surface area than a round dust particle.

### Example 40

A binder was prepared by mixing 2,933 g tetraethyl orthosilicate and 500 g isopropyl alcohol while heating the mixture to 80°C; then 0.4 ml concentrated HCl was added followed by the dropwise addition of 307 g $H_2O$ containing 0.5 ml HCl while stirring for one-half hour. The resultant binder was kept warm for >10 hours before using the binder in the paint formula described hereafter.

The paint formula was formed by subjecting to high shear mixing 112 g isopropanol, 74 g 5% ethyl cellulose in ethoxyethanol, 200 g mica, 17 g strontium chromate, 980 g (8 micron average diameter) zinc dust, and 411 g of the binder prepared as in the previous paragraph. Monoethanolamine in a quantity of 7 g was then added and mixed in. The resultant paint having a viscosity of 74 Krebs remained stable and non-settled for 1 1/2 years at 75-78°C (24-26°C) without thickening or settling hard yet cured to dry-to-touch in 1 to 2 minutes and cured hard in 5 minutes and cured to very hard in 10 minutes after application. Epoxy polyamide topcoats applied directly over the formulation coating cured well with good adhesion and protection.

The resultant coating system cured even through under the organic topcoat to achieve a good protective coating for steel. It was concluded that this formulation was a good production line coating system where rapid early handling and fast curing for topcoating are necessary.

Another paint was made exactly as above except that only 260 g of binder was used and the quantity of isopropanol was increased to 250 g. Then 2 1/2 g dibutyl amine and 3.4 ml monoethanol amine were added as curing agents to the paint. There was formed a single-package primer useful in the production line coating of steel surfaces having rapid dry to handling and rapid cure for epoxy polyamide topcoating directly after application of the zinc.

Other binders based on the above binder were made using 2-ethoxyethanol, butanol, or butoxyethanol rather than isopropanol. The resulting binders when used in paints as described above gave coatings which did not sluff or skin-over or mudcrack as noticeably as when isopropanol was used.

### Examples 41, 42, 43, and 44

The following examples are directed to single package zinc coating compositions wherein each composition contains designed quantities of a binder prepared by reacting 1534.5 g of Ethyl Silicate 40 with 1796 g of 2-ethoxy ethanol in 75 g of water and 5.5 ml of concentrated hydrochloric acid. The characteristics of the compositions are reported hereinbelow.

| Example | 41 | 42 | 43 | 44 |
|---|---|---|---|---|
| Isopropanol (g) | 275 | 225 | 175 | 125 |
| 5% ethyl cellulose in ethoxy ethanol (g) | 74 | 74 | 74 | 74 |
| Bentone 27 (g) | 20 | 20 | 20 | 20 |
| Lead peroxide (g) | 12 | 12 | | 12 |
| Propylene oxide (g) | | | 20 | |
| Diatomaceous silica (g) | 50 | 60 | 20 | 50 |
| Mica (English) (g) | 20 | 20 | 60 | |
| Fed. # 15 zinc dust (g) | 1000 | 1000 | 1000 | |
| Fed. # 1 zinc dust (g) | | | | 1400 |
| Strontium Chromate (g) | 10 | 10 | | |
| Binder (g) | 251 | 300 | 350 | 400 |
| Viscosity (Krebs) | 75 | 76 | 72 | 79 |
| Coating hardness after curing | Hard | Hard | Hard | Hard |
| Mudcrack | >12 | >12 | >12 | >18 |
| Stability (mos.) | >12 | >12 | >12 | >12 |
| Topcoat adhesion | | | | |
| Epoxy polyamide | Excellent | Excellent | Excellent | Excellent |
| High blg. vinyl | Excellent | Excellent | Excellent | Excellent |
| Urethane (high blg.) | Excellent | Excellent | Excellent | Excellent |
| Chlorinated rubber | Excellent | Excellent | Excellent | Excellent |
| Inorganic vehicle paint | Excellent | Excellent | Excellent | Excellent |

CLAIMS:

1. A single package zinc coating composition comprising:
metallic zinc in flake or particulate form,
a silicate binder having a degree of hydrolysis of about 51%
to about 63%, and
a curing agent selected from the group consisting of (a) a
lead oxide, (b) a strong organic amine, (c) organotin compounds, and
mixtures thereof.

2. A single package zinc coating composition comprising:
metallic zinc in flake or particulate form,
a silicate binder having a degree of hydrolysis of from about
51% to about 63% and formed by the reaction of (1) an organic silicate
consisting essentially of ortho or polysilicates having
ester-exchangeable groups of 1 to 6 carbon atoms selected from the
group consisting of alkyl and alkoxyalkyl, siloxanes thereof, and their
mixtures and (2) a glycol ether or alcohol having a boiling point at or
above the boiling point of isobutyl alcohol, and
a curing agent selected from the group consisting of (a) a
lead oxide, (b) a strong organic amine, (c) organotin compounds, and
mixtures thereof.

3. A coating composition as claimed in claim 1 or claim 2
containing zinc in a quantity such that a cured film of the coating
composition has a zinc content of 70 to 88 wt %.

4. A coating composition as claimed in any preceding claim
wherein the silicate binder has a silica content of from about 6% to
about 24%.

5. A coating composition as claimed in any preceding claim
wherein the lead oxide is present in an amount of about 0.1% to about
1.5% by weight.

6. A coating composition as claimed in any preceding claim wherein said organic amine is selected from the group consisting of monoethanolamine, dibutyl amine, diamylamine, diisopropyl amine, cyclohexylamine, diethylenetriamine, triethylene tetraamine, ketamine, and piperidine.

7. A coating composition as claimed in any preceding claim wherein said organic amine is present in an amount of about 0.05 to about 1.5% by weight.

8. A coating composition as claimed in any preceding claim wherein the organotin compound is present in an amount of about 0.05 to 1.5% by weight.

9. A coating composition as claimed in any preceding claim further containing a finely divided filler selected from the group consisting of mica, diatomaceous silica, amorphous silica, crystalline silica, fused silica, alpha quartz silica, zircon, graphite, aluminum powder, aluminum flake, aluminum grit, aluminum beads, glass beads, stainless steel flake, stainless steel powder, iron phosphides, mullite, calcium carbonate, clay, calcined clay, barytes, talc, wollastonite, zinc oxide, and mixtures thereof.

10. A coating composition as claimed in claim 9 wherein said finely divided filler is present in an amount of about 40 to about 250 lb per 100 gal. (18 to 113 kg per 379 l) of the composition.

11. A coating composition as claimed in any preceding claim and containing an anticorrosion agent which is a source of hexavalent chromium ions.

12. A single package zinc coating composition comprising
metallic zinc in flake or particulate form,

a silicate binder having a degree of hydrolysis of about 51%
to about 63%, and

a pigment having alkalinity selected from the group consisting
of magnesium carbonate, calcium carbonate, diatomaceous silica,
bentone, mica (alkaline type), mullite, and wollastonite, said pigment
being present in a quantity to assure basicity of the composition.

13. A coating composition as claimed in claim 1 or claim 12
wherein said silicate binder is formed by the reaction of (1) an
organic silicate consisting essentially of ortho or polysilicates
having ester-exchangeable groups of 1 to 6 carbon atoms selected from
the group consisting of alkyl and alkoxyalkyl, siloxanes thereof, and
their mixtures, and (2) a glycol ether or alcohol having a boiling
point at or above the boiling point of isobutyl alcohol.

14. A coating composition as claimed in Claim 13 wherein said
glycol ether or alcohol is selected from the group consisting of
isobutyl alcohol, ethylene glycol monoethyl ether, ethylene glycol
monobutyl ether, n-butyl alcohol, sec-butyl alcohol, ethoxyethanol, and
amyl alcohol.

15. A single package zinc coating composition comprising
metallic zinc in flake or particulate form, and

a silicate binder having a degree of hydrolysis of from about
55% to about 63% and formed by the reaction of (1) an organic silicate
consisting essentially of ortho or polysilicates having
ester-exchangeable groups of 1 to 6 carbon atoms selected from the
group consisting of alkyl and alkoxyalkyl, siloxanes thereof, and their
mixtures, and (2) ethylene glycol monobutyl ether.

16. A coating composition as claimed in Claim 15 wherein the
ratio of (2) ethylene glycol monobutyl ether to (1) organic silicate is
at least 1:5.

17.  A coating composition comprising:

a silicate binder formed by the reaction of (1) an organic silicate consisting essentially of ortho or polysilicates having ester-exchangeable group of 1 to 6 carbon atoms selected from the group consisting of alkyl and alkoxyalkyl, siloxanes thereof, and their mixtures, and (2) a glycol ether or alcohol having a boiling point at or above the boiling point of isobutyl alcohol,

a finely divided filler selected from the group consisting of mica, diatomaceous silica, alpha quartz silica, fused silica, amorphous silica, crystalline silica, zircon, graphite, aluminum powder, aluminum flake, aluminum grit, aluminum beads, glass beads, stainless steel flake, stainless steel powder, iron phosphides, mica, mullite, calcium carbonate, clay, calcined clay, barytes, talc, wollastonite, zinc oxide, or mixtures thereof, and

a curing agent selected from the group consisting of (a) lead oxide, (b) an organic amine, (c) organotin compounds, and mixtures thereof.

18.  A silicate binder formed by the reaction of (1) an organic silicate consisting essentially of ortho or polysilicates having ester-exchangeable groups of 1 to 6 carbon atoms selected from the group consisting of alkyl alkoxyalkyl, siloxanes thereof, and their mixtures, and (2) a glycol ether or alcohol having a boiling point at or above the boiling point of isobutyl alcohol, said silicate binder further having a degree of hydrolysis of about 51% to about 63%.

19.  A silicate binder as claimed in claim 18 wherein said glycol ether or alcohol is selected from the group consisting of isobutyl alcohol, ethylene glycol monoethyl ether, ethylene glycol monobutyl ether, n-butyl alcohol, sec-butyl alcohol, ethoxyethanol, and amyl alcohol.

20. A method of achieving high speed curing of a silicate binder composition comprising the step of

adding to the silicate binder composition from about 0.05 to 1.5 wt % of a strong organic amine.

21. A method as claimed in claim 20 wherein said strong organic amine is selected from the group consisting of monoethanolamine, dibutyl amine, diamylamine, diisopropyl amine, cyclohexylamine, diethylene triamine, triethylene tetraamine, ketamine, and piperidine.

22. A method as claimed in claim 20 or claim 21 wherein the amine contains a buffering quantity of an acidic zinc salt.

1891n

0064344

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 012 298 (HEMPEL TECHN)<br><br>*Claims 1-8,19 and 21; page 1, lines 35-99; page 2, lines 45-55; page 1, lines 107-125; page 1, lines 100-106; page 2, lines 19-33*<br><br>--- | 1,2,3, 4,6,7, 9,10, 12-22 | C 09 D 3/82<br>C 09 D 5/10 |
| X | GB-A-1 530 243 (STAUFFER)<br><br>*Claims 1-15; page 1, lines 66-88; page 2, lines 21-53; page 2, lines 54-70; from page 2, line 118 - page 3, line 40*<br><br>----- | 1,2,3, 4,5,9, 10,11, 12-20, 22 | |

| TECHNICAL FIELDS SEARCHED (Int. Cl. 3) |
|---|
| C 09 D |

The present search report has been drawn up for all claims

| Place of search | Date of completion of the search | Examiner |
|---|---|---|
| THE HAGUE | 28-07-1982 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82